# NEUE EUROPÄISCHE PATENTSCHRIFT

(11) **EP 3 158 225 B2**
(45) Veröffentlichungstag und Bekanntmachung des Hinweises auf die Entscheidung über den Einspruch: **21.05.2025**
(45) Hinweis auf die Patenterteilung: 28.11.2018
(21) Anmeldenummer: 15741488.9
(22) Anmeldetag: 12.06.2015
(51) Int. Cl.: F16F 15/14

(54) **FLIEHKRAFTPENDEL**
CENTRIFUGAL PENDULUM
PENDULE CENTRIFUGE

(30) Priorität: 18.06.2014 DE 102014211711
(43) Veröffentlichungstag der Anmeldung: 26.04.2017
(73) Patentinhaber: Schaeffler Technologies AG & Co. KG, 91074 Herzogenaurach (DE)
(72) Erfinder: RUSCH, Alain, F-67170 Brumath (FR); DUSHEV, Alexander, 77883 Ottenhöfen (DE); LEHMANN, Steffen, 76275 Ettlingen (DE)
(86) Internationale Anmeldenummer: PCT/DE2015/200359
(87) Internationale Veröffentlichungsnummer: WO 2015/192846

(56) Entgegenhaltungen:
- DE-A1- 102010 029 464
- DE-A1- 102010 034 812
- DE-A1- 102012 220 560

## Beschreibung

Die Erfindung betrifft ein Fliehkraftpendel mit einem um eine Drehachse verdrehbaren Pendelflansch und über den Umfang verteilten, in dem Pendelflansch im Fliehkraftfeld des drehenden Pendelflanschs pendelnd eingehängten Pendeln.

Fliehkraftpendel dienen der Reduzierung von Torsionsschwingungen und enthalten einen um eine Drehachse verdrehbaren Pendelflansch und Pendel mit voreingestellten Massen. Diese Pendel führen im Feld der Zentrifugalbeschleunigung Schwingungen auf vorgegebenen Bahnen aus, wenn sie durch Drehzahlungleichförmigkeiten, die beispielsweise durch drehschwingungsbehaftete Brennkraftmaschinen von Antriebssträngen von Kraftfahrzeugen eingetragen werden, angeregt werden. Durch diese Schwingungen wird der Erregerschwingung der Drehungleichförmigkeiten an den Drehmomentanstiegen Energie entzogen und bei gegenüber einem mittleren Drehmoment abfallenden Drehmomenten wieder zugeführt, so dass es zu einer Beruhigung der Erregerschwingung kommt. Das Fliehkraftpendel wirkt hierbei infolge der bei zunehmenden Drehzahlen zunehmenden Fliehkraft als drehzahladaptiver Drehschwingungstilger, da sowohl die Eigenfrequenz der Fliehkraftpendelschwingung als auch die Erregerfrequenz proportional zur Drehzahl sind. Beispielsweise ist aus der DE 10 2011 086 532 A1 ein an einer Kupplungsscheibe einer Reibungskupplung aufgenommenes Fliehkraftpendel bekannt, welches einen Pendelflansch aufweist, an dem die Pendel auf Rollenbahnen der Pendel und des Pendelflanschs mittels Pendelrollen geführt sind. Unter Fliehkraft sind die Pendel durch die Zentrifugalkraft nach außen gespannt.

Sobald die Schwerkraft der jeweils oben liegenden Pendel die auf die Pendel wirkende Fliehkraft überschreitet, beispielsweise bei geringen Drehzahlen des Pendelflanschs beim Start oder Stopp der den Pendelflansch antreibenden Brennkraftmaschine, einem Auskuppeln der Reibungskupplung oder bei einem Anhalten des Fahrzeugs fallen die Pendelmassen unter Schwerkraft gegen Anschläge des Pendelflanschs. Die hierdurch entstehenden Geräusche wirken komfortmindernd. Um diese Geräusche zu reduzieren, kann zwischen den Pendeln und den Anschlägen eine Puffereinrichtung aus Kunststoff wie Elastomer oder Gummi vorgesehen sein. Hierbei ermöglicht ein Spiel zwischen den Pendeln und dem Pendelflansch axiale Schwingungen der Pendel. Bei die Fliehkraft übersteigender Schwerkraft der Pendel entstehen aufgrund dieses Spiels unerwünschte metallische Geräusche trotz radialer Puffereinrichtung.

Aus der FR 1 042 826 ist ein Fliehkraftpendel bekannt, das auf den Oberbegriff des Patentanspruchs 1 lesbar ist.

Aufgabe der Erfindung ist die vorteilhafte Weiterbildung eines Fliehkraftpendels mit weiter verminderter Geräuschentwicklung.

Die Aufgabe wird durch den Gegenstand des Patentanspruchs 1 gelöst. Die von diesem abhängigen Patentansprüche geben vorteilhafte Ausführungsformen des Gegenstands des Patentanspruchs 1 wieder.

Das vorgeschlagene Fliehkraftpendel enthält einen um eine Drehachse verdrehbaren Pendelflansch und über den Umfang verteilte, in dem Pendelflansch im Fliehkraftfeld des drehenden Pendelflanschs pendelnd eingehängte Pendel. Das Fliehkraftpendel kann an einer Kupplungsscheibe, an einem Schwungrad oder einem weiteren Antriebsbauteil aufgenommen sein, ausgangsseitig oder eingangsseitig in einen Drehschwingungsdämpfer, beispielsweise ein Zweimassenschwungrad, in einen hydrodynamischen Drehmomentwandler, in eine Reibungskupplung, in eine Doppelkupplung oder in eine vergleichbare Komponente eines Antriebsstrangs eines Kraftfahrzeugs integriert sein. Die Pendel sind an bevorzugt jeweils zwei in Umfangsrichtung beabstandeten Schwenklagern an dem Pendelflansch aufgenommen. Die Art der Pendelschwingung, beispielsweise einer bifilar mit parallel oder trapezförmiger Fadenanordnung schwingenden Fadenpendel nachgebildeten oder in Freiform schwingenden Pendelschwingung ist durch eine entsprechende Ausbildung von an Wandungen von Ausschnitten vorgesehenen Rollbahnen in den Pendeln und im Pendelflansch vorgesehen, auf denen pro Schwenklager eine jeweils die Rollbahnen übergreifende Pendelrolle abwälzt. Ein Axialspiel zwischen Pendeln und Pendelflansch wird vermieden, indem die Pendel axial gegenüber dem Pendelflansch vorgespannt sind.

Die axiale Vorspannung zwischen Pendeln und Pendelflansch kann unabhängig von der Art der Ausbildung des Pendelflanschs und der Anordnung der Pendel gegenüber diesem erfolgen. Beispielsweise kann der Pendelflansch aus einem einzigen Träger- oder Scheibenteil gebildet sein, wobei die Pendel jeweils beidseitig an dem Trägerteil angeordnet sind. Jeweils axial gegenüber liegende Pendel sind dabei mittels das Trägerteil an entsprechenden Ausschnitten durchgreifender Verbindungsmittel wie Abstandsbolzen miteinander zu Pendelpaaren verbunden. In diesem Fall kann ein Pendel eines Pendelpaars gegenüber dem Trägerteil axial so vorgespannt sein, dass das andere Pendel des Pendelpaars in Kontakt wie Reibkontakt zu dem Trägerteil tritt. Gemäß der Erfindung ist der Pendelflansch aus zwei axial beabstandeten Scheibenteilen gebildet, wobei die Pendel zwischen den Scheibenteilen axial vorgespannt aufgenommen und ist ein zwischen einem der Scheibenteile und jeweils einem Pendel axial vorgespanntes, jeweils ein Pendel gegen das andere Scheibenteil vorspannendes Kontaktelement vorgesehen. Dies bedeutet, dass in dem Pendel und/oder in dem Pendelflansch - nämlich in einem der beiden Scheibenteile ein Kontaktelement entgegen der axialen Wirkung eines Energiespeichers axial verlagerbar aufgenommen ist, so dass zwischen diesem Scheibenteil und dem Pendel eine Axialkraft ausgebildet wird, die das Pendel axial gegen das andere Scheibenteil vorspannt.

Hierbei kann zwischen den Pendeln und dem Pendelflansch, beispielsweise einem von zwei axial beabstandeten Scheibenteilen jeweils ein metallischer Reibkontakt ausgebildet werden. Alternativ kann das Kontaktelement aus Kunststoff gebildet sein, so dass eine Reibpaarung Kunststoff/Metall ausgebildet wird. Alternativ oder zusätzlich kann an dem anderen Scheibenteil oder dem anderen axial gegenüberliegenden Pendel eine Reibpaarung aus Metall und Kunststoff vorgesehen sein, wobei in dem Pendel oder in dem anderen Scheibenteil eine Kunststoffeinlage oder -beschichtung in Form eines Gegenkontaktelements vorgesehen ist. Desweiteren können Reibpaarungen aus Kunststoff/Kunststoff vorgesehen sein, wobei einem Kontaktelement aus Kunststoff axial gegenüber ein Gegenkontaktelement aus Kunststoff vorgesehen ist und/oder an der anderen Kontaktpaarung des Pendels und des anderen Scheibenteils jeweils axial gegenüberliegende Gegenkontaktelemente vorgesehen sind.

Das Kontaktelement kann von einer Blattfeder oder einer Schraubenfeder vorgespannt sein. Hierbei ist ein axial verlagerbares Kontaktelement auf einer Blattfeder, einer Schraubenfeder oder dergleichen aufgenommen. Das Kontaktelement kann in dem Pendel oder in dem Pendelflansch aufgenommen sein. Alternativ kann das Kontaktelement aus dem Pendelflansch wie Scheibenteil oder einem Pendel ausgestellt sein. Beispielsweise kann pro Kontaktpaarung zwischen Pendel und Pendelflansch zumindest eine Lasche bevorzugt in Umfangsrichtung ausgestellt sein.

Die zwischen den Pendeln und dem Pendelflansch wirksamen Axialkräfte bewirken eine Reibung der Pendel gegenüber dem Pendelflansch und damit eine geringfügige Störung der Pendelbewegung und damit eine Verschlechterung der Schwingungstilgung durch die Pendel. Hierbei kann die Axialkraft so eingestellt werden, dass diese Verschlechterung tolerierbar oder vernachlässigbar ist. Bei kleinen Axialkräften kann vorgesehen sein, radial innerhalb der Pendel eine Puffereinrichtung, beispielsweise einen Pufferring oder Pufferfüße aus Kunststoff, beispielsweise aus Elastomer, Gummi oder dergleichen vorzusehen. Diese Puffereinrichtung federt radial nach innen verlagerte Pendel geräuscharm oder geräuschlos ab, die bei langsam drehendem Pendelflansch und daher die Fliehkraft übersteigender Schwerkraft der Pendel nach radial innen aus den Schwenklagern fallen. Bei schnell drehendem Pendelflansch mit in den Schwenklagern pendelnd aufgehängten Pendeln ist zwischen diesen und der Puffereinrichtung ein Radialspalt über den Schwingwinkel der Pendel eingestellt, um ein störungsfreies Pendeln dieser zu ermöglichen.

Alternativ können die Pendel mittels der axialen Vorspannung bei die Schwerkraft unterschreitender Fliehkraft in ihren radialen Positionen gehalten sein, so dass auf eine Puffereinrichtung verzichtet werden kann.

Die Erfindung wird anhand der in den Figuren 1 bis 17 dargestellten Ausführungsbeispiele näher erläutert. Dabei zeigen:
- Figur 1: ein Fliehkraftpendel in Ansicht,
- Figur 2: einen Schnitt durch das Fliehkraftpendel der Figur 1 entlang der Schnittlinie H-H,
- Figur 3: einen Schnitt durch das Fliehkraftpendel der Figur 1 entlang der Schnittline J-J,
- Figur 4: das Kontaktelement der Figuren 2 und 3 in 3D-Ansicht,
- Figur 5: das Fliehkraftpendel der Figur 1 in Explosionsdarstellung,
- Figuren 6 bis 17: weitere Ausführungsformen zur Herstellung einer axialen Vorspannung zwischen einem Pendel und einem Pendelflansch.

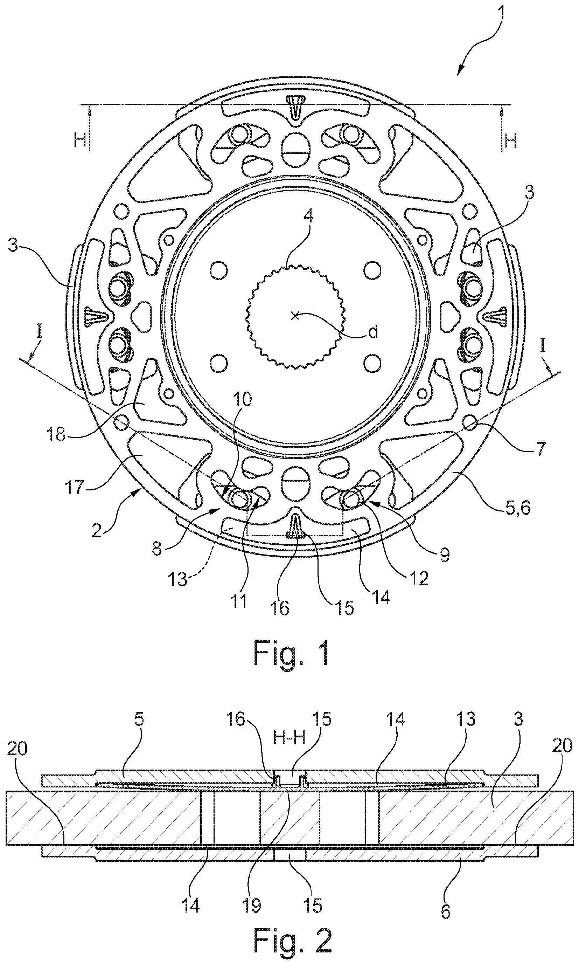

Die Figur 1 zeigt das um die Drehachse d verdrehbare, mittels der Innenverzahnung 4 beispielsweise auf einer Kupplungsscheibe aufgenommene Fliehkraftpendel 1 in Ansicht. Der Pendelflansch 2 ist aus zwei radial außen beabstandeten, mittels der Abstandsbolzen 7 miteinander verbundenen und radial innen einander berührenden Scheibenteilen 5, 6 gebildet, zwischen denen die über den Umfang verteilt angeordneten Pendel 3 angeordnet sind. Die Pendel 3 mit einer vorgegebenen auf eine Schwingungsordnung einer Erregerschwingung abgestimmten Massen und Schwingwinkeln sind an jeweils zwei Schwenklagern 8, 9 im Fliehkraftfeld pendelnd an dem Pendelflansch 2 aufgehängt. Die Schwenklager 8, 9 sind aus den in Ausschnitten der Scheibenteile 5, 6 und in den Pendelmassen ausgebildeten Rollenbahnen 10, 11 und auf diesen jeweils abwälzenden Pendelrollen 12 gebildet.

Um ein Axialspiel zwischen dem Pendelflansch 2 und den Pendeln 3 abzubauen, sind zwischen den Pendeln 3 und einem Scheibenteil die Kontaktelemente 13 axial zwischen den Pendeln 3 und dem Scheibenteil 5 axial verspannt. Die Kontaktelemente 13 sind hierbei aus Kunststoff hergestellt und in den Ausformungen 14 des Scheibenteils 5 bogenförmig vorgespannt aufgenommen und in den Öffnungen 15 des Scheibenteils 5 mittels der Nasen 16 fixiert. Die Kontaktelemente 13 spannen die Pendel 3 gegen das andere Scheibenteil 6 vor. Die Ausschnitte 17, 18 dienen insbesondere der Massenreduzierung des Pendelflanschs 2.

Die Figur 2 zeigt einen Schnitt des Fliehkraftpendels 1 der Figur 1 entlang der Schnittlinie H-H. Hieraus sind die beiden Scheibenteile 5, 6, die das Pendel 3 axial zwischen sich aufnehmen ersichtlich. Axial zwischen dem Scheibenteil 5 und dem Pendel 3 ist das Kontaktelement 13 in der Ausformung 14 des Scheibenteils 5 bogenförmig vorgespannt aufgenommen und mittels der Nase 16 in der Öffnung 15 fixiert. Der Bauch 19 des Kontaktelements 13 spannt elastisch das Pendel 3 gegen die Anlageflächen 20 des Scheibenteils 6 vor. Da die beiden Scheibenteile 5, 6 als Gleichteile ausgebildet sind, verfügt das Scheibenteil 6 ebenfalls über eine ungenutzte Ausformung 14 und die Öffnung 15.

Aufgrund der axialen Vorspannung des Pendels 3 ist dieses in dem Bauraum zwischen den Scheibenteilen 5, 6 axial mittels einer geringen Reibkraft festgelegt, jedoch nur unwesentlich in seiner Pendelbewegung behindert, so dass insbesondere bei nachlassender oder fehlender Fliehkraft und dadurch aus den Schwenklagern 8, 9 (Figur 1) verlagerten Pendeln 3 und gegebenenfalls beim Wiederbeschleunigen des Fliehkraftpendels 1 geräuschintensive Anschläge der Pendel 3 an den Scheibenteilen 5, 6 unterbleiben.

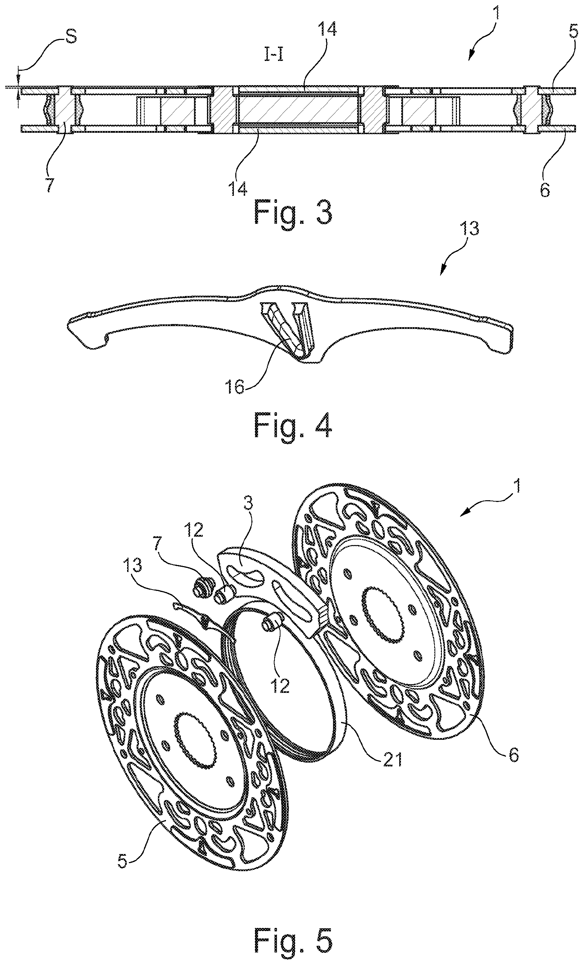

Die Figur 3 zeigt das Fliehkraftpendel 1 der Figur 1 entlang der Schnittlinie J-J. Hieraus wird deutlich, dass die Ausformungen 14 der Scheibenteile 5, 6 mit ihrem Axialmaß s axial innerhalb der Bauräume der Abstandsbolzen 7 bleiben, so dass insgesamt der axiale Bauraum des Fliehkraftpendels 1 erhalten bleibt.

Die Figur 4 zeigt das Kontaktelement 13 des Fliehkraftpendels 1 der Figuren 1 und 2 in 3D-Ansicht. Das Kontaktelement ist aus Kunststoff beispielsweise mittels eines Spritzgießverfahrens hergestellt und axial elastisch ausgebildet und weist die axial angeformte Nase 16 auf.

Die Figur 5 zeigt das Fliehkraftpendel 1 der Figuren 1 bis 3 in Explosionsdarstellung mit den Scheibenteilen 5, 6, den Pendelrollen 12 sowie jeweils als einziges Bauteil dargestellt das Pendel, den Abstandsbolzen 7 und das Kontaktelement 13. Radial innerhalb der Pendel 3 ist mit Radialspiel die ringförmige, beispielsweise aus Elastomer gebildete Puffereinrichtung 21 vorgesehen, die die Pendel 3 radial innen geräuscharm abstützen, wenn diese schwerkraftbedingt bei nachlassender oder nicht vorhandener Fliehkraft nach radial innen fallen. Soll die Puffereinrichtung 21 eingespart werden, kann die axiale Vorspannung der Kontaktelemente 13 soweit erhöht werden, dass diese infolge Reibung radial gehalten werden.

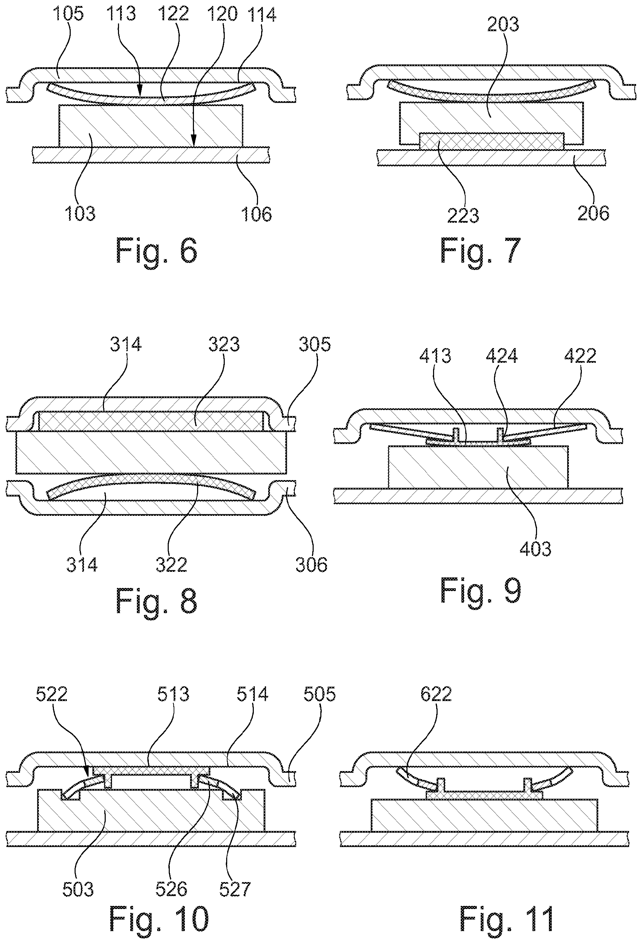

Die Figuren 6 bis 17 zeigen gegenüber der in den Figuren 1 bis 5 dargestellten axialen Vorspannung der Pendel gegenüber dem Pendelflansch alternative Ausführungsformen der axialen Vorspannung.

Im Einzelnen erfolgt die axiale Vorspannung in der Figur 6 mittels des als Blattfeder 122 ausgebildeten Kontaktelements 113. Die Blattfeder 122 aus Stahl ist in der Ausnehmung 114 des Scheibenteils 105 aufgenommen und spannt das Pendel 103 gegen die Anlagefläche 120 des hier planen Scheibenteils 106 vor.

In der Abänderung der axialen Vorspannung der Figur 6 ist zur axialen Vorspannung der Figur 7 das Gegenkontaktelement 223 aus Kunststoff vorgesehen, welches an dem Pendel 203 aufgenommen ist und mit dem Scheibenteil 206 einen Reibkontakt mit der Reibpaarung Kunststoff/Stahl ausbildet.

Im Unterschied zu der axialen Vorspannung der Figur 7 ist in Figur 8 das Gegenkontaktelement 323 in der Ausformung 314 des Scheibenteils 305 aufgenommen. Die Blattfeder 322 ist in der Ausformung 314 des Scheibenteils 306 aufgenommen.

Im Unterschied zu der axialen Vorspannung der Figur 6 verfügt die axiale Vorspannung der Figur 9 mit einer zwischen der Blattfeder 422 und dem Pendel 403 über die Reibpaarung Kunststoff/Metall. Hierzu ist an der Ausnehmung 424 der Blattfeder 422 das mit dem Pendel 403 in Reibkontakt tretende Kontaktelement 413 aufgenommen. Im Unterschied zu der axialen Vorspannung der Figur 9 ist in Figur 10 die Tellerfeder 522 mit dem Kraftrand 526 und den Federfingern 527 vorgesehen. Zusätzlich ist die Tellerfeder 522 mit dem Kontaktelement 513 an dem Pendel 503 aufgenommen und bildet an der Ausformung 514 des Scheibenteils 505 den Reibeingriff.

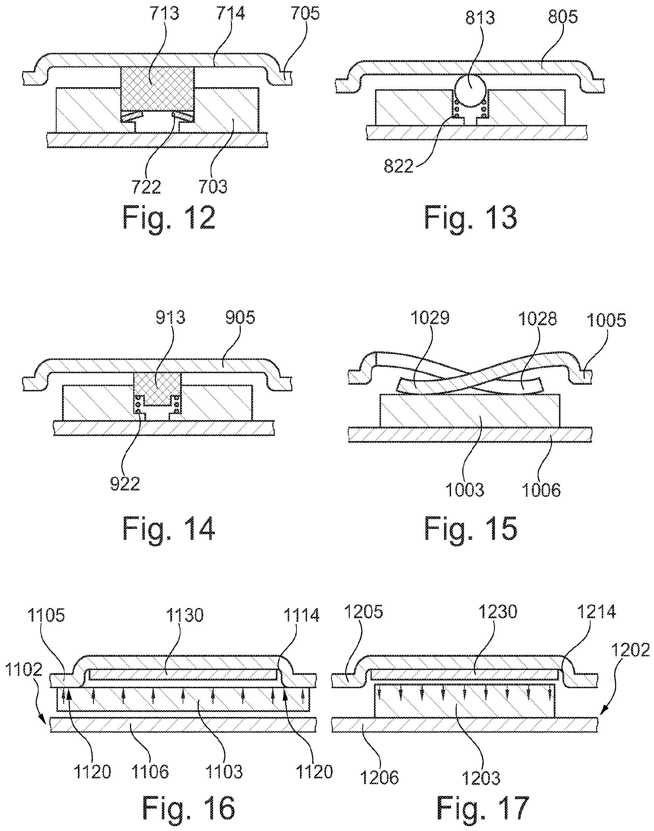

Die axiale Vorspannung der Figur 11 ist entsprechend der axialen Vorspannung der Figur 9 gebildet, wobei anstatt der Blattfeder 422 die Tellerfeder 622 vorgesehen ist. Die Figur 12 zeigt die axiale Vorspannung des verlagerbar in dem Pendel 703 aufgenommenen Kontaktelements 713, das mittels der zwischen Pendel 703 und Kontaktelement 713 angeordneten Tellerfeder 722 gegen die Ausformung 714 des Scheibenteils 705 vorgespannt ist und einen Reibeingriff mit diesem ausbildet.

Im Unterschied zu der axialen Vorspannung der Figur 12 ist in der Figur 13 das Kontaktelement 813 als Kugel ausgebildet und wird von der Schraubendruckfeder 822 gegen das Scheibenteil 805 vorgespannt. Hierdurch kann durch Verminderung der Reibfläche zwischen Kugel und Scheibenteil 805 die Reibkraft vermindert und gegebenenfalls ein Wälzkontakt eingestellt werden.

In Figur 14 ist das in Figur 13 als Kugel ausgebildete Kontaktelement 813 durch das zylindrische, von der Schraubendruckfeder 922 beaufschlagte Kontaktelement 913 mit vergrößerter Reibfläche gegenüber dem Scheibenteil 905 ersetzt.

Die Figur 15 zeigt eine axiale Vorspannung, bei der neben dem Pendel 1003 und den Scheibenteilen 1005, 1006 auf weitere Bauteile verzichtet wird. Hierzu sind aus dem Scheibenteil 1005 in Umfangsrichtung zwei gegenläufige, axial elastische Zungen 1028, 1029 ausgestellt, die das Pendel 1003 axial gegen das andere Scheibenteil 1006 vorspannen.

Die Figuren 16 und 17 zeigen eine kontaktlose axiale Vorspannung der Pendel 1103, 1203 gegen den aus den Scheibenteilen 1105, 1106, 1205, 1206 gebildeten Pendelflansch 1102, 1202 mittels der Magnetelemente 1130, 1230. Hierzu ist in Figur 16 das Magnetelement 1130 fest in der Ausformung 1114 des Scheibenteils 1105 aufgenommen und wirkt auf das Pendel 1103 anziehend, so dass diese mit den Anlageflächen 1120 desselben Scheibenteils 1105 einen Reibeingriff bildet. Im Gegensatz hierzu ist in Figur 17 das in der Ausformung 1214 fest aufgenommene Magnetelement 1230 gegenpolig zu dem magnetischen oder ein Magnetelement aufweisenden Pendel 1203 ausgerichtet, so dass die magnetische Abstoßung das Pendel 1203 gegen das andere Scheibenteil 1206 axial vorspannt.

### Bezugszeichenliste

- 1: Fliehkraftpendel
- 2: Pendelflansch
- 3: Pendel
- 4: Innenverzahnung
- 5: Scheibenteil
- 6: Scheibenteil
- 7: Abstandsbolzen
- 8: Schwenklager
- 9: Schwenklager
- 10: Rollenbahn
- 11: Rollenbahn
- 12: Pendelrolle
- 13: Kontaktelement
- 14: Ausformung
- 15: Öffnung
- 16: Nase
- 17: Ausschnitt
- 18: Ausschnitt
- 19: Bauch
- 20: Anlagefläche
- 21: Puffereinrichtung
- 103: Pendel
- 105: Scheibenteil
- 106: Scheibenteil
- 113: Kontaktelement
- 114: Ausnehmung
- 120: Anlagefläche
- 122: Blattfeder
- 203: Pendel
- 206: Scheibenteil
- 223: Gegenkontaktelement
- 305: Scheibenteil
- 306: Scheibenteil
- 314: Ausformung
- 322: Blattfeder
- 323: Gegenkontaktelement
- 403: Pendel
- 413: Kontaktelement
- 422: Blattfeder
- 424: Ausnehmung
- 503: Pendel
- 505: Scheibenteil
- 513: Kontaktelement
- 514: Ausformung
- 522: Tellerfeder
- 526: Kraftrand
- 527: Federfinger
- 622: Tellerfeder
- 703: Pendel
- 705: Scheibenteil
- 713: Kontaktelement
- 714: Ausformung
- 722: Tellerfeder
- 805: Scheibenteil
- 813: Kontaktelement
- 822: Schraubendruckfeder
- 905: Scheibenteil
- 913: Kontaktelement
- 922: Schraubendruckfeder
- 1003: Pendel
- 1005: Scheibenteil
- 1006: Scheibenteil
- 1028: Zunge
- 1029: Zunge
- 1103: Pendel
- 1102: Pendelflansch
- 1105: Scheibenteil
- 1106: Scheibenteil
- 1114: Ausformung
- 1120: Anlagefläche
- 1130: Magnetelement
- 1202: Pendelflansch
- 1203: Pendel
- 1205: Scheibenteil
- 1206: Scheibenteil
- 1214: Ausformung
- 1230: Magnetelement
- d: Drehachse
- H-H: Schnittlinie
- J-J: Schnittlinie
- s: Axialmaß

## Patentansprüche

1. Fliehkraftpendel (1) mit einem um eine Drehachse (d) verdrehbaren Pendelflansch (2, 1202) und über den Umfang verteilten, in dem Pendelflansch (2, 1202) im Fliehkraftfeld des drehenden Pendelflanschs (2, 1102, 1202) pendelnd eingehängten Pendeln (3, 103, 203, 403, 503, 703, 1003, 1103, 1203), wobei die Pendel (3, 103, 203, 403, 503, 703, 1003, 1103, 1203) an bevorzugt jeweils zwei in Umfangsrichtung beabstandeten Schwenklagern (8, 9) an dem Pendelflansch (2, 1102, 1202) aufgenommen sind und dass an Wandungen von Ausschnitten vorgesehene Rollbahnen (10, 11) in den Pendeln (3, 103, 203, 403, 503, 703, 1003, 1103, 1203) und im Pendelflansch (2, 1102, 1202) ausgebildet sind, auf denen pro Schwenklager (8, 9) eine jeweils die Rollbahnen (10, 11) übergreifende Pendelrolle (12) abwälzt, wobei der Pendelflansch (2, 1102, 1202) aus zwei axial beabstandeten Scheibenteilen (5, 105, 305, 505, 705, 805, 905, 1005, 1105, 1205, 6, 106, 206, 306, 1006, 1106, 1206) gebildet ist und die Pendel (3, 103, 203, 403, 503, 703, 1003, 1103, 1203) zwischen den Scheibenteilen (5, 105, 305, 505, 705, 805, 905, 1005, 1105, 1205, 6, 106, 206, 306, 1006, 1106, 1206) axial vorgespannt aufgenommen sind, wobei zumindest zwischen einem der Scheibenteile (5, 105, 305, 505, 705, 805, 905, 1005, 1105, 1205, 6, 106, 206, 306, 1006, 1106, 1206) und jeweils einem Pendel (3, 103, 203, 403, 503, 703, 1003, 1103, 1203) ein axial vorgespanntes, jeweils ein Pendel (3, 103, 203, 403, 503, 703, 1003, 1103, 1203) gegen ein Scheibenteil (5, 105, 305, 505, 705, 805, 905, 1005, 1105, 1205, 6, 106, 206, 306, 1006, 1106, 1206) vorspannendes Kontaktelement (13, 113, 413, 513, 713, 813, 913) vorgesehen ist, **dadurch gekennzeichnet, dass** das Kontaktelement von einer Blattfeder (122, 322, 422), einer Tellerfeder (522, 622, 722) oder einer Schraubendruckfeder (822, 922) vorgespannt ist.

2. Fliehkraftpendel (1) nach Anspruch 1, **dadurch gekennzeichnet, dass** das Kontaktelement (13, 113, 413, 513, 713, 813, 913) aus Kunststoff gebildet ist.

3. Fliehkraftpendel (1) nach einem der Ansprüche 1 bis 2, **dadurch gekennzeichnet, dass** auf dem dem Kontaktelement gegenüber liegenden Scheibenteil (305) oder einem Pendel (203) ein Gegenkontaktelement (223, 323) vorgesehen ist.

4. Fliehkraftpendel (1) nach einem der Ansprüche 1 bis 3, **dadurch gekennzeichnet, dass** mittels der axialen Vorspannung die Pendel (3, 103, 203, 403, 503, 703, 1003, 1103, 1203) bei die Schwerkraft unterschreitender Fliehkraft in ihren radialen Positionen gehalten sind.

5. Fliehkraftpendel (1) nach einem der Ansprüche 1 bis 3, **dadurch gekennzeichnet, dass** bei drehendem Pendelflansch (2, 1102, 1202) radial innerhalb der Pendel (3, 103, 203, 403, 503, 703, 1003, 1103, 1203) mit Radialspiel eine Puffereinrichtung (21) für bei die Schwerkraft unterschreitender Fliehkraft nach radial innen fallenden Pendel (3, 103, 203, 403, 503, 703, 1003, 1103, 1203) aus Kunststoff vorgesehen ist.

## Claims

1. Centrifugal pendulum (1) having a pendulum flange (2, 1202) which can rotate about a rotational axis (d) and pendulums (3, 103, 203, 403, 503, 703, 1003, 1103, 1203) which are distributed over the circumference and are suspended in the pendulum flange (2, 102) in the centrifugal force field of the rotating pendulum flange (2, 1102, 1202), wherein the pendulums (3, 103, 203, 403, 503, 703, 1003, 1103, 1203) are mounted at the pendulum flange (2, 1102, 1202) at preferably two swivel bearings (8, 9) each which are spaced apart in the circumferential direction, and that roller tracks (10, 11) which are provided at walls of cutouts are formed in the pendulums (3, 103, 203, 403, 503, 703, 1003, 1103, 1203) and in the pendulum flange (2, 1102, 1202), on which one pendulum roller (12) per swivel bearing (8, 9) bridging the respective roller tracks (10, 11) rolls, wherein the pendulum flange (2, 1102, 1202) is formed from two axially spaced-apart disc components (5, 105, 305, 505, 705, 805, 905, 1005, 1105, 1205, 6, 106, 206, 306, 1006, 1106, 1206), and the pendulums (3, 103, 203, 403, 503, 703, 1003, 1103, 1203) are accommodated in an axially prestressed fashion between the disc components (5, 105, 305, 505, 705, 805, 905, 1005, 1105, 1205, 6, 106, 206, 306, 1006, 1106, 1206), wherein an axially prestressed contact element (13, 113, 413, 513, 713, 813, 913) which in each case prestresses a pendulum (3, 103, 203, 403, 503, 703, 1003, 1103, 1203) against a disc component (5, 105, 305, 505, 705, 805, 905, 1005, 1105, 1205, 6, 106, 206, 306, 1006, 1106, 1206) is provided at least between one of the disc components (5, 105, 305, 505, 705, 805, 905, 1005, 1105, 1205, 6, 106, 206, 306, 1006, 1106, 1206) and a respective pendulum (3, 103, 203, 403, 503, 703, 1003, 1103, 1203), **characterized in that** the contact element is prestressed by a leaf spring (122, 322, 422) or a plate spring (522, 622, 722) or of a helical compression spring (822, 922).

2. Centrifugal pendulum (1) according to Claim 1, **characterized in that** the contact element (13, 113, 413, 513, 713, 813, 913) is formed from plastic.

3. Centrifugal pendulum (1) according to one of Claims 1 to 2, **characterized in that** a counter-contact element (223, 323) is provided on the disc component (305) lying opposite the contact element, or on a pendulum (203).

4. Centrifugal pendulum (1) according to one of Claims 1 to 3, **characterized in that** the pendulums (3, 103, 203, 403, 503, 703, 1003, 1103, 1203) are held in their radial positions by means of the axial prestress when there is a centrifugal force which is less than gravity.

5. Centrifugal pendulum (1) according to one of Claims 1 to 3, **characterized in** the case of a rotating pendulum flange (2, 1102, 1202) radially within the pendulum (3, 103, 203, 403, 503, 703, 1003, 1103, 1203) with radial play, a buffer device (21) made of plastic is provided for pendulums (3, 103, 203, 403, 503, 703, 1003, 1103, 1203) which fall radially inward when the centrifugal force is less than gravity.

## Revendications

1. Pendule centrifuge (1) comprenant une bride de pendule (2, 1202) rotative autour d'un axe de rotation (d) et des pendules (3, 103, 203, 403, 503, 703, 1003, 1103, 1203) répartis sur la périphérie et suspendus de façon oscillante dans la bride de pendule (2, 1202) dans le champ de force centrifuge de la bride de pendule (2, 1102, 1202) en rotation, dans lequel les pendules (3, 103, 203, 403, 503, 703, 1003, 1103, 1203) sont de préférence reçus contre respectivement deux paliers de pivotement (8, 9) espacés dans une direction circonférentielle contre la bride de pendule (2, 1102, 1202) et des chemins de roulement (10, 11) prévus contre des parois de sections sont conçus dans les pendules (3, 103, 203, 403, 503, 703, 1003, 1103, 1203) et dans la bride de pendule (2, 1102, 1202), sur lesquels pour chaque palier de pivotement (8, 9) un rouleau pendulaire (12) débordant respectivement sur les chemins de roulement (10, 11) roule, dans lequel la bride de pendule (2, 1102, 1202) est formée de deux parties de disque (5, 105, 305, 505, 705, 805, 905, 1005, 1105, 1205, 6, 106, 206, 306, 1006, 1106, 1206) espacées axialement et les pendules (3, 103, 203, 403, 503, 703, 1003, 1103, 1203) sont reçus de façon axialement précontraints entre les parties de disque (5, 105, 305, 505, 705, 805, 905, 1005, 1105, 1205, 6, 106, 206, 306, 1006, 1106, 1206), dans lequel, au moins entre l'une des parties de disque (5, 105, 305, 505, 705, 805, 905, 1005, 1105, 1205, 6, 106, 206, 306, 1006, 1106, 1206) et respectivement un pendule (3, 103, 203, 403, 503, 703, 1003, 1103, 1203), est prévu un élément de contact (13, 113, 413, 513, 713, 813, 913) contraignant respectivement un pendule (3, 103, 203, 403, 503, 703, 1003, 1103, 1203) contre une partie de disque (5, 105, 305, 505, 705, 805, 905, 1005, 1105, 1205, 6, 106, 206, 306, 1006, 1106, 1206), **caractérisé en ce que** l'élément de contact est précontraint par un ressort à lame (122, 322, 422), une rondelle-ressort (522, 622, 722) ou un ressort de compression hélicoïdal (822, 922).

2. Pendule centrifuge (1) selon la revendication 1, **caractérisé en ce que** l'élément de contact (13, 113, 413, 513, 713, 813, 913) est formé de matière plastique.

3. Pendule centrifuge (1) selon l'une des revendications 1 à 2, **caractérisé en ce que** sur la partie de disque (305) située à l'opposé de l'élément de contact ou sur un pendule (203) est prévu un élément de contre-contact (223, 323).

4. Pendule centrifuge (1) selon l'une des revendications 1 à 3, **caractérisé en ce que** les pendules (3, 103, 203, 403, 503, 703, 1003, 1103, 1203) sont maintenus, au moyen de la précontrainte axiale, dans leurs positions radiales lorsque la force centrifuge est inférieure à la force de pesanteur.

5. Pendule centrifuge (1) selon l'une des revendications 1 à 3, **caractérisé en ce que**, dans le cas d'une bride de pendule (2, 1102, 1202) en rotation radialement à l'intérieur des pendules (3, 103, 203, 403, 503, 703, 1003, 1103, 1203) avec jeu radial, un équipement tampon (21) en matière plastique est prévu pour des pendules (3, 103, 203, 403, 503, 703, 1003, 1103, 1203) tombant radialement vers l'intérieur lorsque la force centrifuge est inférieure à la force de pesanteur.
